# EUROPÄISCHE PATENTSCHRIFT

(11) **EP 3 574 121 B1**
(45) Veröffentlichungstag und Bekanntmachung des Hinweises auf die Patenterteilung: **04.11.2020**
(21) Anmeldenummer: 18701473.3
(22) Anmeldetag: 24.01.2018
(51) Int. Cl.: C21C 5/52, F27B 3/20, F27B 3/22

(54) **BRENNER-LANZENEINSATZ FÜR EINEN LICHTBOGENOFEN**
BURNER LANCE INSERT FOR AN ARC FURNACE
LANCES DE BRÛLEUR POUR UN FOUR ÉLECTRIQUE À ARC

(30) Priorität: 24.01.2017 EP 17152834
(43) Veröffentlichungstag der Anmeldung: 04.12.2019
(73) Patentinhaber: Primetals Technologies Germany GmbH, 91058 Erlangen (DE)
(72) Erfinder: BEILE, Hannes, 77955 Ettenheim (DE); MUELLER, Alexander, 77652 Offenburg (DE); ROESSLE, Anton, 89143 Blaubeuren (DE)
(74) Vertreter: Metals@Linz
(86) Internationale Anmeldenummer: PCT/EP2018/051703
(87) Internationale Veröffentlichungsnummer: WO 2018/138133

(56) Entgegenhaltungen:
- DE-B3-102012 007 528
- DE-U1- 7 711 990

## Beschreibung

Die Erfindung betrifft einen Brenner-Lanzeneinsatz für einen Lichtbogenofen.

In Lichtbogenöfen werden häufig Hilfsbrenner und/oder thermische Lanzen eingesetzt, um in Bereiche von Lichtbogenöfen zusätzlich Energie einzutragen, die von der Energie der Lichtbögen nicht genügend erhitzt werden.

Der Erfindung liegt die Aufgabe zugrunde, eine verbesserte Brenner-Lanzenvorrichtung zum Energieeintrag in einen Lichtbogenofen anzugeben.

Die Aufgabe wird erfindungsgemäß durch einen Brenner-Lanzeneinsatz mit den Merkmalen des Anspruchs 1 gelöst.

Vorteilhafte Ausgestaltungen der Erfindung sind Gegenstand der Unteransprüche.

Ein Brenner Einsatz für einen Lichtbogenofen ist beispielsweise in der DE102012007528 B3 gezeigt. Hierbei ist der Brenner derart gelagert, dass eine Bewegung vom Rand zur Mitte des Schmelzgefäßes erfolgt - also die Drehachse in horizontaler Richtung angeordnet ist. Die Drehbewegung erfolgt ausschließlich in vertikaler Richtung, in horizontaler Richtung ist keine Drehbewegung vorgesehen.

Ein erfindungsgemäßer Brenner-Lanzeneinsatz für einen Lichtbogenofen weist einen Trägerkörper, eine Brenner-Lanzeneinheit und eine Antriebseinheit auf. Der Trägerkörper ist in eine Wandöffnung des Lichtbogenofens einsetzbar und weist eine Frontöffnung auf, die nach dem Einsetzen des Trägerkörpers in die Wandöffnung dem Ofeninneren des Lichtbogenofens zugewandt ist. Die Brenner-Lanzeneinheit ist in dem Trägerkörper um eine Drehachse drehbar gelagert und weist einen Ausgabekanal auf, der zu einer in der Frontöffnung liegenden Ausgabeöffnung der Brenner-Lanzeneinheit verläuft, wobei die Drehachse nach dem Einsetzen des Trägerkörpers in die Wandöffnung einen Winkel zwischen 30 Grad und 60 Grad, besonders bevorzugt 40 Grad bis 50 Grad, mit der Richtung der Erdanziehungskraft bildet und eine Ausgaberichtung der Brenner-Lanzeneinheit zur Ausgabe eines Betriebsstoffes und/oder einer Flamme definiert. Die Ausgaberichtung nach dem Einsetzen des Trägerkörpers in die Wandöffnung ist ständig in das Schmelzgefäß gerichtet. Die Brenner-Lanzeneinheit, ist dazu geeignet sowohl einen Brenner Betrieb als auch einen Lanzen Betrieb auszuführen. Durch die Antriebseinheit ist die Brenner-Lanzeneinheit zwischen zwei Endstellungen drehbar, in denen die Ausgabeöffnung voneinander verschiedene Positionen in der Frontöffnung annimmt und der Ausgabekanal voneinander verschiedene Ausgaberichtungen definiert.

Mit Schmelzgefäß wird der Teil von einem Lichtbogenofen verstanden, der geschmolzenes Metall aufnimmt. Das Schmelzgefäß weist eine Ausmauerung auf. Die Ausgaberichtung soll so ausgerichtet sein, dass diese stets auf das geschmolzene Metall und bevor geschmolzenes Metall vorliegt auf den eingebrachten Schrott gerichtet werden kann. Dies bedeutet, dass über den gesamten Bereich von einer Endstellung in die zweite Endstellung die Ausgaberichtung stets in das Schmelzgefäß gerichtet ist. Die Ausgaberichtung soll nicht gegen eine Ofenwand oder einen Ofendeckel zeigen. Der Verlauf der Drehachse ist derart, dass sie einen Winkel zwischen 30 Grad und 60 Grad mit der Richtung der Erdanziehungskraft bildet, wobei eine Hauptbewegungskomponente der Drehbewegung der Brenner-Lanzeneinheit, nach dem Einsetzen des Trägerkörpers in die Wandöffnung, nach links oder rechts zeigt, also im 90 Grad Winkel zu der Richtung der Erdanziehungskraft steht. Die Drehbewegung der Brenner-Lanzeneinheit, nach dem Einsetzen des Trägerkörpers in die Wandöffnung, erfolgt also derart, dass die Hauptbewegungskomponente in horizontaler Richtung erfolgt. Es können natürlich neben der Hauptbewegungskomponente noch Bewegungskomponente in andere Richtungen zeigen, je nachdem wie die Drehachse A angeordnet ist, aber der überwiegende Teil der Bewegung von über 60%, bevorzugt über 70%, besonders bevorzugt über 80% soll in horizontaler Richtung erfolgen, also 90 Grad zu der Richtung der Erdanziehungskraft. Die im Stand der Technik bekannten Ausführungen - wie beispielsweise die DE102012007528 B3 - weist eine Drehachse auf, die stets parallel zur Oberkannte der Ausmauerung angeordnet ist bzw. ein 90 Grad Winkel zur Richtung der Erdanziehungskraft aufweist und die Hauptbewegungskomponente, bei eingesetztem Trägerkörper in die Wandöffnung, zeigt in Richtung oder entgegen der Richtung der Erdanziehungskraft oder in Richtung oder entgegen der Richtung von Elektroden des Lichtbogenofens. Bei dieser Ausführung zeigt die Bewegung also nach oben oder unten oder nach Innen oder Außen. Die Hauptbewegungskomponente der vorliegenden Erfindung soll, nach dem Einsetzen des Trägerkörpers in die Wandöffnung, nicht ausschließlich in Richtung oder entgegen der Richtung der Erdanziehungskraft oder in Richtung der Elektroden bzw. zum Mittelpunkt des Lichtbogenofens zeigen.
Durch diesen Brenner Lanzeneinsatz ist es möglich, dass im Brenner Betrieb die Schrotteinschmelzung effektiver ist, da durch die Drehbewegung nach links oder rechts, der Energieeintrag auf den in den Lichtbogenofen eingebrachten Schrott besser ist. Wenn der Schrott geschmolzen ist wird die Brenner Lanzeneinheit in den Lanzen Betrieb umgeschaltet. Im Lanzen Betrieb kann ein injizieren des Sauerstoffs auf größeres Stahlbadvolumen verteilt werden. Dadurch werden lokale Überhitzungen vermieden. Durch die Drehbewegung wie beispielsweise die DE102012007528 B3 zeigt, bei der die Drehbewegung derart erfolgt, dass die Ausgaberichtung von der Seite zur Mitte des Lichtbogenofens hin geführt werden kann, herrscht die Problematik, dass zu viel Energieeintrag in Richtung der Elektroden erfolgt oder Spritzer auf die Elektroden auftreffen. Durch die erfinderische Brenner-Lanzeneinsatz, wird durch die Drehbewegung der Brenner-Lanzeneinheit eine besser Homogenisierung des Stahlbadvolumens, aufgrund der besseren Energieverteilung, erreicht. Durch den erfinderischen Brenner-Lanzeneinsatz wird ein Einschmelzprozess und eine Homogenisierung der Schmelze im Lichtbogenofen effizienter und schneller.

Durch die Anordnung der Brenner-Lanzeneinheit in dem Trägerkörper und die Anordnung der Ausgabeöffnung in der Frontöffnung des Trägerkörpers ist der Brenner-Lanzeneinsatz besonders kompakt ausgeführt und kann platzsparend in einen Brennerpaneel integriert werden. Die drehbare Lagerung der Brenner-Lanzeneinheit in dem Trägerkörper ermöglicht ferner eine Änderung der Ausgaberichtung der Brenner-Lanzeneinheit, so dass die von der Brenner-Lanzeneinheit abgegebene Energie vorteilhaft über einen größeren Bereich in dem Lichtbogenofen verteilt werden kann als bei einer festen Anordnung der Brenner-Lanzeneinheit, wodurch die Effizienz der Brennerleistung bzw. des Betriebsstoffeintrags der Brenner-Lanzeneinheit in dem Lichtbogenofen erhöht wird. Eine vorteilhafte Ausführungsform sieht vor, dass die Antriebseinheit einen wenigstens annähernd parallel zu dem Ausgabekanal angeordneten Antriebszylinder aufweist, der über ein erstes Gelenk mit dem Trägerkörper und über ein zweites Gelenk mit der Brenner-Lanzeneinheit verbunden ist.

Unter einer zu dem Ausgabekanal parallelen Anordnung des Antriebszylinders wird verstanden, dass sich ein Antriebskolben des Antriebszylinders annähernd parallel zu dem Ausgabekanal der Brenner-Lanzeneinheit - wenn sich dieser Ausgabekanal, in einer zwischen den beiden Endstellungen liegenden Mittelstellung befindet - bewegt. Unter annähernd parallel wird eine Abweichung von ±10 Grad verstanden. Die Anordnung des Arbeitszylinders wenigstens annähernd parallel zu dem Ausgabekanal bewirkt vorteilhaft eine platzsparende Anordnung der Antriebseinheit und verringert weiter den für den Brenner-Lanzeneinsatz erforderlichen Bauraum.

Eine Ausgestaltung der Erfindung sieht vor, dass die Brenner-Lanzeneinheit eine frontöffnungsseitige Ausgabekomponente aufweist, durch die ein frontöffnungsseitiger Endabschnitt des Ausgabekanals verläuft und die zwei sich auf verschiedenen Seiten des Ausgabekanals gegenüberliegende konvexe Außenoberflächen aufweist, deren Flächennormalen in zu der Drehachse senkrechten Ebenen liegen und die sich jeweils zu der Frontöffnung erstrecken. Dabei sind die frontöffnungsseitigen Enden der beiden konvexen Außenoberflächen beispielsweise durch einen planen Oberflächenbereich der Ausgabekomponente verbunden, in dem die Ausgabeöffnung angeordnet ist. Ferner weist die Ausgabekomponente beispielsweise einen Kühlkanal, einen Kühlmitteleinlass zur Einführung eines Kühlmittels in den Kühlkanal und einen Kühlmittelauslass zur Abführung des Kühlmittels aus dem Kühlkanal auf. Des Weiteren ist die Antriebseinheit beispielsweise über das zweite Gelenk mit der Ausgabekomponente verbunden. Die Ausführung der Ausgabekomponente mit zwei konvexen Außenoberflächen ermöglicht vorteilhaft eine konstruktiv einfache und platzsparende Drehung der Ausgabekomponente im Bereich der Frontöffnung. Die plane Ausführung des die Ausgabeöffnung umgebenden Oberflächenbereichs der Ausgabekomponente bewirkt gegenüber einer gewölbten Ausführung vorteilhaft eine kompaktere Gestaltung der Ausgabekomponente. Die Ausführung der Ausgabekomponente mit einem Kühlkanal, einem Kühlmitteleinlass und einem Kühlmittelauslass ermöglicht vorteilhaft eine Kühlung der Ausgabekomponente durch ein Kühlmittel, das durch den Kühlkanal geleitet wird. Die Verbindung der Antriebseinheit mit der Ausgabekomponente über das zweite Gelenk bewirkt vorteilhaft einen direkt auf die Ausgabekomponente wirkenden Krafteintrag der Antriebseinheit.

Eine weitere Ausgestaltung der Erfindung sieht eine Dichtung zur Abdichtung eines Zwischenraums zwischen der Brenner-Lanzeneinheit und dem Trägerkörper im Bereich der Frontöffnung vor. Dadurch kann vorteilhaft eine Schädigung des Brenner-Lanzeneinsatzes durch das Eindringen von Schadstoffen in den Trägerkörper verhindert werden.

Eine weitere Ausgestaltung der Erfindung sieht vor, dass die Brenner-Lanzeneinheit eine Zuführungseinheit zur Einleitung des Betriebsstoffes in den Ausgabekanal aufweist. Beispielsweise ist die Zuführungseinheit lösbar mit der Ausgabekomponente verbunden. Die Zuführungseinheit ermöglicht die Versorgung der Brenner-Lanzeneinheit mit Betriebsstoffen. Die lösbare Verbindung der Zuführungseinheit und der Ausgabekomponente vereinfacht die Wartung und den Austausch der Brenner-Lanzeneinheit.

Eine weitere Ausgestaltung der Erfindung sieht vor, dass der Ausgabekanal senkrecht zu der Drehachse verläuft. Dadurch wird die Effizienz der Antriebseinheit vorteilhaft erhöht, da Drehungen der Brenner-Lanzeneinheit in optimal in Änderungen der Ausgaberichtung der Brenner-Lanzeneinheit umgesetzt werden.

Eine weitere Ausgestaltung der Erfindung sieht vor, dass die Ausgaberichtung in einer zwischen den beiden Endstellungen liegenden Mittelstellung der Brenner-Lanzeneinheit einen Winkel zwischen 30 Grad und 60 Grad, besonders bevorzugt zwischen 40 Grad und 50 Grad, mit der Richtung der Erdanziehungskraft bildet, wenn der Brenner-Lanzeneinsatz in die Wandöffnung des Lichtbogenofens eingesetzt ist. Die Mittelstellung ist jene Position in der ein Winkel der Ausgaberichtung zu einer Frontplatte, in welcher die Ausgabeöffnung angeordnet ist, 90 Grad beträgt. Bei Drehung der Brenner-Lanzeneinheit in eine der beiden Endstellung ändert sich dieser Winkel der Ausgaberichtung zu der Frontplatte.

In einer weiteren Ausführungsform der Erfindung umfasst der Trägerkörper eine Frontplatte welche eine Frontöffnung aufweist, eine Deckelplatte die oberhalb der Frontplatte angeordnet ist, sowie zwei Seitenplatten, wobei diese jeweils mit der Frontplatte und der Deckelplatte verbunden sind und die Frontöffnung einschließen. Die Brenner-Lanzeneinheit ist in dem Trägerkörper um die Drehachse drehbar gelagert, wobei die Drehachse derart angeordnet ist, dass die Brenner-Lanzeneinheit überwiegend, bevorzugt ausschließlich, bewegbar in Richtung einer der zwei Seitenplatten ist. Die Drehachse kann derart gestaltet sein, dass sie nahezu parallel zu einer Vorderkante der Seitenplatte ist, wobei die Vorderkante mit der Frontplatte verbunden ist. Unter Vorderkante wird die Schnittkante zwischen Frontplatte und einer Seitenplatte verstanden. Die Seitenplatten sind nahezu rechtwinklig zur Oberkannte der Ausmauerung angeordnet. Die Frontplatte ist in einem Winkel zwischen 30-60° zur Oberkante der Ausmauerung gerichtet. Die Drehachse weist ebenso einen fixen Winkel zur Oberkante der Ausmauerung auf der zwischen 30-60° liegt. Unter bewegbar in Richtung der Seitenplatten ist derart zu verstehen, dass eine Hauptbewegungskomponente in die Richtung einer der Seitenwände zeigt.

Eine weitere Ausgestaltung der Erfindung sieht vor, dass ein Drehen der Brenner-Lanzeneinheit von einer ersten Endstellung in die zweite Endstellung die Ausgaberichtung um bis zu 60 Grad, vorzugsweise um 20 bis 30 Grad ändert. Diese Winkelbereiche ermöglichen vorteilhaft besonders effiziente Verteilungen der Energie der Brenner-Lanzeneinheit in dem Lichtbogenofen.

Eine weitere Ausgestaltung der Erfindung sieht vor, dass der Antriebszylinder ein Hydraulik- oder Pneumatikzylinder ist. Dies ermöglicht vorteilhaft eine konstruktiv einfache und flexible Gestaltung der Antriebseinheit mit hohen Wirkungsgraden und Stellgenauigkeiten.

Eine weitere Ausgestaltung der Erfindung sieht vor, dass der Trägerkörper ein kastenartiges rückseitig offenes Gehäuse für die Brenner-Lanzeneinheit aufweist, das die Frontöffnung aufweist und in das Ofeninnere des Lichtbogenofens hineinragt, wenn der Brenner-Lanzeneinsatz in die Wandöffnung eingesetzt ist. Durch das Gehäuse wird die Brenner-Lanzeneinheit vorteilhaft vor Beschädigungen geschützt.

Ein erfindungsgemäßer Lichtbogenofen weist wenigstens einen erfindungsgemäßen Brenner-Lanzeneinsatz auf. Die Vorteile eines derartigen Lichtbogenofens ergeben sich aus den oben genannten Vorteilen eines erfindungsgemäßen Brenner-Lanzeneinsatzes.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine vorderseitige perspektivische Darstellung eines Ausführungsbeispiels eines Brenner-Lanzeneinsatzes ohne Deckelplatte,
FIG 2 eine perspektivische Darstellung des in Figur 1 gezeigten Brenner-Lanzeneinsatzes im Bereich einer Frontöffnung,
FIG 3 eine rückseitige perspektivische Darstellung des in Figur 1 gezeigten Brenner-Lanzeneinsatzes,
FIG 4 eine vorderseitige perspektivische Darstellung des in Figur 1 gezeigten Brenner-Lanzeneinsatzes, eine von dem Brenner-Lanzeneinsatz ausgegebene Flamme und einen von dem Brenner-Lanzeneinsatz ausgegebenen Betriebsstoff, und
FIG 5 schematisch eine Schnittdarstellung eines Lichtbogenofens mit dem in Figur 1 gezeigten Brenner-Lanzeneinsatz.

Einander entsprechende Teile sind in den Figuren mit denselben Bezugszeichen versehen.

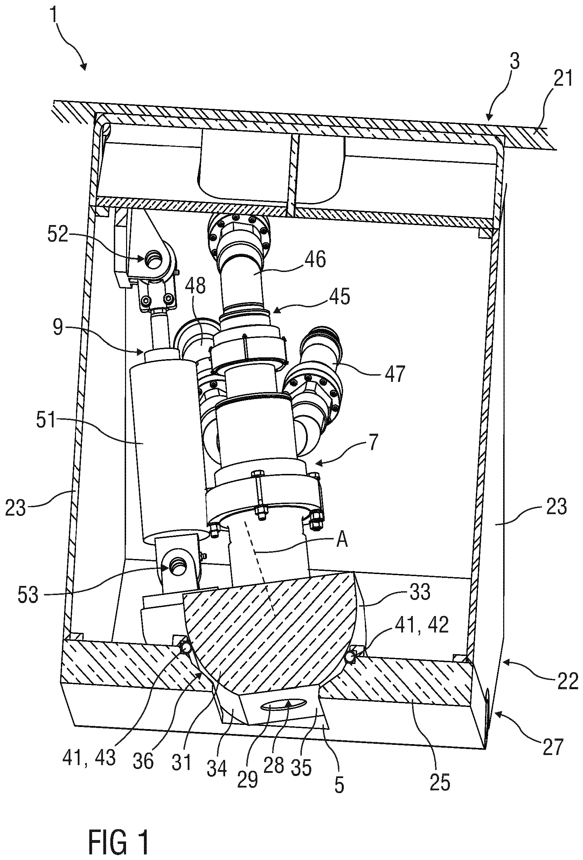

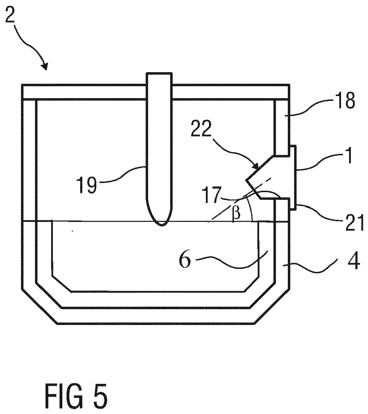

Die Figuren 1 bis 4 zeigen perspektivische Darstellungen eines Ausführungsbeispiels eines Brenner-Lanzeneinsatzes 1 für einen Lichtbogenofen 2 (siehe Figur 5). Der Brenner-Lanzeneinsatz 1 umfasst einen Trägerkörper 3 mit einer Frontöffnung 5, eine in dem Trägerkörper 3 um eine Drehachse A drehbar gelagerte Brenner-Lanzeneinheit 7 und eine Antriebseinheit 9 zum Drehen der Brenner-Lanzeneinheit 7 um die Drehachse A.

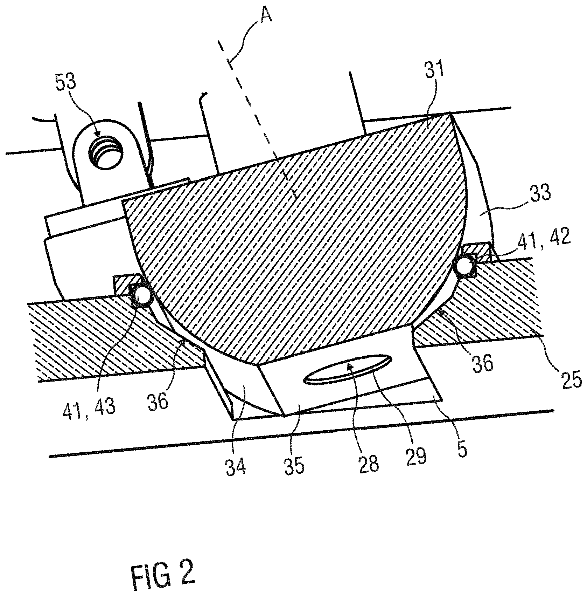

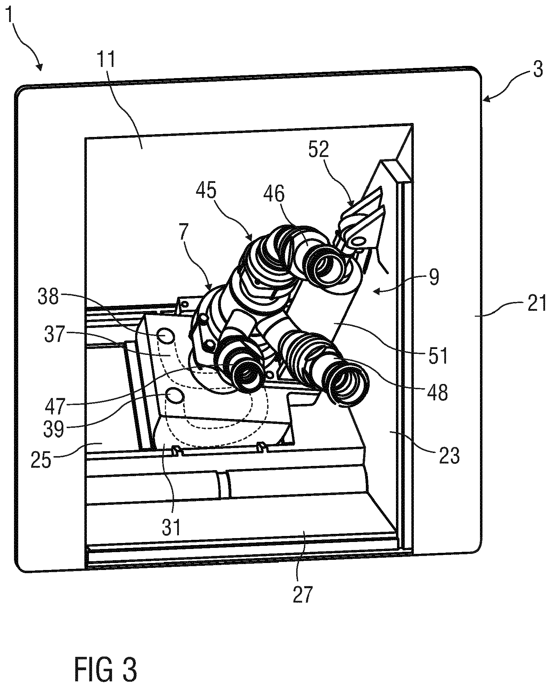

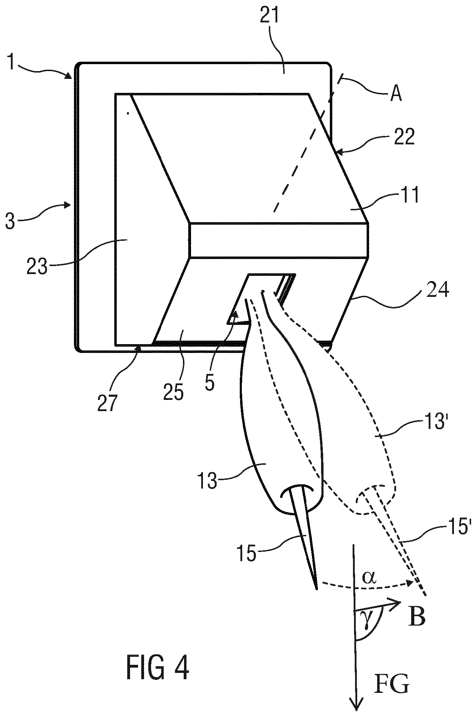

Dabei zeigt Figur 1 den Brenner-Lanzeneinsatz 1 ohne eine Deckelplatte 11 des Trägerkörpers 3 von einer Vorderseite, Figur 2 zeigt den Brenner-Lanzeneinsatz 1 im Bereich der Frontöffnung 5 ebenfalls ohne die Deckelplatte 11, Figur 3 zeigt den Brenner-Lanzeneinsatz 1 von der Rückseite und Figur 4 zeigt den Brenner-Lanzeneinsatz 1 sowie eine von der Brenner-Lanzeneinheit 7 ausgegebene Flamme 13, 13' und einen von der Brenner-Lanzeneinheit 7 strahlförmig ausgegebenen Betriebsstoff 15, 15'. Der Betriebsstoff 15, 15' ist beispielsweise ein Gas, z. B. Sauerstoff. In dieser Figur ist auch die Haupbewegungskomponente B, die sich durch die Bewegung um die Drehachse A ergibt, dargestellt. Diese Hauptbewegungskomponente B steht im Winkel γ zur Richtung der Erdanziehungskraft FG. Der Winkel γ beträgt in einer bevorzugten Auführungsform 90 Grad. Es können natürlich auch noch Bewegungskomponente in andere Richtungen zeigen je nachdem wie die Drehachse A angeordnet ist, aber der überwiegende Teil der Bewegung von über 60%, bevorzugt über 70%, besonders bevorzugt über 80%, soll in horizontaler Richtung erfolgen, also 90 Grad zu der Richtung der Erdanziehungskraft FG.

Der Trägerkörper 3 ist in eine Wandöffnung 17 einer Ofenwand 18 des Lichtbogenofens 2 einsetzbar, so dass die Frontöffnung 5 dem Ofeninneren des Lichtbogenofens 2 zugewandt ist. Die Drehachse ist nahezu parallel zu einer Vorderkante der Seitenplatte 24. Die Seitenplatte 23 ist mit der Frontplatte 25 verbunden und eine Deckelplatte 11 liegt oberhalb der Frontplatte 25. Die Vorderkante der Seitenplatte 24 ist direkt mit der Frontplatte 25 verbunden.

Figur 5 zeigt schematisch eine Schnittdarstellung des Lichtbogenofens 2 mit einer Elektrode 19 und dem in die Wandöffnung 17 eingesetzten Brenner-Lanzeneinsatz 1. Der untere Abschnitt des Lichtbogenofens 2 wird als Schmelzgefäß 4 bezeichnet, dieses Schmelzgefäß weist eine Ausmauerung 6 auf.
Der Trägerkörper 3 umfasst einen Halterahmen 21 und ein kastenartiges rückseitig offenes Gehäuse 22 für die Brenner-Lanzeneinheit 7, von dem der Halterahmen 21 flanschartig absteht und das in das Ofeninnere des Lichtbogenofens 2 hineinragt, wenn der Brenner-Lanzeneinsatz 1 in die Wandöffnung 17 eingesetzt ist. Das Gehäuse 22 wird von der Deckelplatte 11, zwei Seitenplatten 23, einer Frontplatte 25 und einer Bodenplatte 27 gebildet. Der Halterahmen 21 dient der Befestigung des Brenner-Lanzeneinsatzes 1 an der Ofenwand 18 und ist dazu ausgebildet, die Wandöffnung 17 einzufassen. Die Deckelplatte 11, die Bodenplatte 27 und die Seitenplatten 23 erstrecken sich jeweils von dem Halterahmen 21 zu der Frontplatte 25. Die Frontplatte 25 weist die Frontöffnung 5 auf.

Die Brenner-Lanzeneinheit 7 weist einen Ausgabekanal 28 auf, der senkrecht zu der Drehachse A zu einer in der Frontöffnung 5 liegenden Ausgabeöffnung 29 verläuft und eine Ausgaberichtung der Brenner-Lanzeneinheit 7 zur Ausgabe der Flamme 13, 13' und des Betriebsstoffes 15, 15' definiert. Die Ausgaberichtung weist im eingebauten Zustand und in einer Mittelstellung, welche zwischen zwei Endstellungen liegt, einen Ausgaberichtungswinkel β zur Oberkante der Ausmauerung 6 auf, wie dies in Figur 5 dargestellt ist. Die Mittelstellung ist jene Position in der ein Winkel der Ausgaberichtung zu einer Frontplatte, in welcher die Ausgabeöffnung angeordnet ist, 90 Grad beträgt. Bei Drehung der Brenner-Lanzeneinheit in eine der beiden Endstellung ändert sich dieser Winkel der Ausgaberichtung zu der Frontplatte. Die Ausmauerung 6 kann auch abgeschrägt ausgeführt sein, in diesem Fall gilt als Oberkante die gedachte Kante ohne Abschrägung. Der Ausgaberichtungswinkel β ändert sich durch eine Drehbewegung kaum, es soll also in der in Figur 5 dargestellten Ansicht keine Schwenkbewegung zur Elektrode 19 hin oder weg erfolgen, sondern die Schwenkbewegung soll in die Ebene hinein oder heraus erfolgen.

Die Brenner-Lanzeneinheit 7 weist eine frontöffnungsseitige Ausgabekomponente 31 auf, durch die ein frontöffnungsseitiger Endabschnitt des Ausgabekanals 28 verläuft. Die Ausgabekomponente 31 weist zwei sich auf verschiedenen Seiten des Ausgabekanals 28 gegenüberliegende konvexe Außenoberflächen 33, 34 auf, deren Flächennormalen in zu der Drehachse A senkrechten Ebenen liegen und die sich jeweils zu der Frontöffnung 5 erstrecken. Die frontöffnungsseitigen Enden der beiden konvexen Außenoberflächen 33, 34 sind durch einen planen Oberflächenbereich 35 der Ausgabekomponente 31 verbunden, in dem die Ausgabeöffnung 5 angeordnet ist. Die Ausgabekomponente 31 ist beispielsweise um die Drehachse A drehbar an der Deckelplatte 11 gelagert. Zwei jeweils einer konvexen Außenoberfläche 33, 34 zugewandte Innenoberflächen 36 der Frontplatte 25 sind jeweils gegenüber der Außenoberfläche der Frontplatte 25 abgeschrägt ausgebildet, so dass jede der beiden Innenoberflächen 36 im Wesentlichen tangential zu der ihr jeweils zugewandten konvexen Außenoberfläche 33, 34 ist.

Die Ausgabekomponente 31 weist einen Kühlkanal 37 auf. Der Kühlkanal 37 weist einen Kühlmitteleinlass 38 zur Einführung eines Kühlmittels in den Kühlkanal 37 und einen Kühlmittelauslass 39 zur Abführung des Kühlmittels aus dem Kühlkanal 37 auf. Der Kühlkanal 37 verläuft U-förmig um den Ausgabekanal 28 herum.

Im Bereich der Frontöffnung 5 ist eine Dichtung 41 zur Abdichtung eines Zwischenraums zwischen der Ausgabekomponente 31 und der Frontplatte 25 angeordnet. Die Dichtung 41 wird von zwei Dichtungsrollen 42, 43 gebildet, die jeweils an der Frontplatte 25 und einer der beiden konvexen Außenoberflächen 33, 34 der Ausgabekomponente 31 anliegen. Beispielsweise werden die Dichtungsrollen 42, 43 jeweils aus einer metallischen Wolle gefertigt.

Die Brenner-Lanzeneinheit 7 weist ferner eine Zuführungseinheit 45 zur Einleitung des Betriebsstoffes 15, 15' in den Ausgabekanal 28 auf. Die Zuführungseinheit 45 ist lösbar mit der Ausgabekomponente 31 verbunden und weist drei Zuführungsrohre 46 bis 48 auf, die sich zu der Rückseite des Trägerkörpers 3 hin erstrecken. In die von der Frontplatte 25 abgewandte Seite der Ausgabekomponente 31 ist ein frontplattenseitiges Ende der Zuführungseinheit 45 eingeführt.

Die Antriebseinheit 9 weist einen wenigstens annähernd parallel zu dem Ausgabekanal 28 angeordneten Antriebszylinder 51 auf, der über ein erstes Gelenk 52 mit einer Seitenwand 23 des Trägerkörpers 3 und über ein zweites Gelenk 53 mit der Ausgabekomponente 31 der Brenner-Lanzeneinheit 7 verbunden ist. Der Antriebszylinder 51 ist beispielsweise ein Hydraulik- oder Pneumatikzylinder.

Mit der Antriebseinheit 9 ist die Brenner-Lanzeneinheit 7 zwischen zwei Endstellungen um die Drehachse A drehbar. Ein Drehen der Brenner-Lanzeneinheit 7 von einer ersten Endstellung in die zweite Endstellung ändert die Ausgaberichtung der Brenner-Lanzeneinheit 7 um einen Drehwinkel a. In dem in Figur 4 gezeigten Beispiel beträgt der Drehwinkel α etwa 20 Grad. Es kann jedoch auch ein größerer Drehwinkel α bis zu 60 Grad vorgesehen sein. In einer zwischen den beiden Endstellungen liegenden Mittelstellung der Brenner-Lanzeneinheit 7 bildet die Ausgaberichtung einen Winkel zwischen 40 Grad und 50 Grad mit der Richtung der Erdanziehungskraft, wenn der Brenner-Lanzeneinsatz 1 in die Wandöffnung 17 des Lichtbogenofens 2 eingesetzt ist.

Obwohl die Erfindung im Detail durch ein bevorzugtes Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen. Insbesondere kann der Trägerkörper 3 des Brenner-Lanzeneinsatzes 1 anders als bei dem in den Figuren 1 bis 5 dargestellten Ausführungsbeispiel ausgebildet sein. Ein alternatives Ausführungsbeispiel sieht beispielsweise vor, dass der Trägerkörper 3 kein Gehäuse 22 aufweist, das von dem Halterahmen 21 in das Ofeninnere des Lichtbogenofens 2 hineinragt, sondern dass die Vorderseite des Trägerkörpers 3 im Wesentlichen plan ausgebildet ist und die Brenner-Lanzeneinheit 7 in einem Gestell des Trägerkörpers 3 gelagert ist, das an der Rückseite des Halterahmens 21 angeordnet ist.

### Bezugszeichenliste

- 1: Brenner-Lanzeneinsatz
- 2: Lichtbogenofen
- 3: Trägerkörper
- 4: Schmelzgefäß
- 5: Frontöffnung
- 6: Ausmauerung
- 7: Brenner-Lanzeneinheit
- 9: Antriebseinheit
- 11: Deckelplatte
- 13, 13': Flamme
- 15, 15': Betriebsstoff
- 17: Wandöffnung
- 18: Ofenwand
- 19: Elektrode
- 21: Halterahmen
- 22: Gehäuse
- 23: Seitenplatten
- 24: Vorderkante Seitenplatte
- 25: Frontplatte
- 27: Bodenplatte
- 28: Ausgabekanal
- 29: Ausgabeöffnung
- 31: Ausgabekomponente
- 33, 34: konvexe Außenoberfläche
- 35: planer Oberflächenbereich
- 36: Innenoberfläche
- 37: Kühlkanal
- 38: Kühlmitteleinlass
- 39: Kühlmittelauslass
- 41: Dichtung
- 42, 43: Dichtungsrolle
- 45: Zuführungseinheit
- 46 bis 48: Zuführungsrohr
- 51: Antriebszylinder
- 52, 53: Gelenk
- α: Drehwinkel
- β: Ausgaberichtungswinkel
- γ: Winkel Hauptbewegunskomponente zur Richtung der Erdanziehungskraft
- A: Drehachse
- FG: Richtung der Erdanziehungskraft
- B: Hauptbewegungskomponente

## Patentansprüche

1. Brenner-Lanzeneinsatz (1) für einen Lichtbogenofen (2) mit einem Schmelzgefäß, der Brenner-Lanzeneinsatz (1) aufweisend
- einen in eine Wandöffnung (17) des Lichtbogenofens (2) einsetzbaren Trägerkörper (3) mit einer Frontöffnung (5), die nach dem Einsetzen des Trägerkörpers (3) in die Wandöffnung (17) dem Ofeninneren des Lichtbogenofens (2) zugewandt ist,
- eine in dem Trägerkörper (3) um eine Drehachse (A) drehbar gelagerte Brenner-Lanzeneinheit (7) mit einem Ausgabekanal (28), der zu einer in der Frontöffnung (5) liegenden Ausgabeöffnung (29) der Brenner-Lanzeneinheit (7) verläuft, **dadurch gekennzeichnet, dass** die Drehachse (A), nach dem Einsetzen des Trägerkörpers (3) in die Wandöffnung (17), einen Winkel zwischen 30 Grad und 60 Grad, besonders bevorzugt 40 Grad bis 50 Grad, mit der Richtung der Erdanziehungskraft bildet und eine Ausgaberichtung der Brenner-Lanzeneinheit (7) zur Ausgabe eines Betriebsstoffes (15, 15') und/oder einer Flamme (13, 13') definiert, wobei die Ausgaberichtung nach dem Einsetzen des Trägerkörpers (3) in die Wandöffnung (17) ständig in das Schmelzgefäßes gerichtet ist,
- die Brenner-Lanzeneinheit (7) ist dazu geeignet, sowohl einen Brenner Betrieb als auch einen Lanzen Betrieb auszuführen
- und eine Antriebseinheit (9) zum Drehen der Brenner-Lanzeneinheit (7) zwischen zwei Endstellungen, in denen die Ausgabeöffnung (29) voneinander verschiedene Positionen in der Frontöffnung (5) annimmt und der Ausgabekanal (28) voneinander verschiedene Ausgaberichtungen definiert.

2. Brenner-Lanzeneinsatz (1) nach Anspruch 1, **dadurch gekennzeichnet, dass** die Antriebseinheit (9) einen wenigstens annähernd parallel zu dem Ausgabekanal (28) angeordneten Antriebszylinder (51) aufweist, der über ein erstes Gelenk (52) mit dem Trägerkörper (3) und über ein zweites Gelenk (53) mit der Brenner-Lanzeneinheit (7) verbunden ist.

3. Brenner-Lanzeneinsatz (1) nach Anspruch 1 oder 2,
**dadurch gekennzeichnet, dass** die Brenner-Lanzeneinheit (7) eine frontöffnungsseitige Ausgabekomponente (31) aufweist, durch die ein frontöffnungsseitiger Endabschnitt des Ausgabekanals (28) verläuft und die zwei sich auf verschiedenen Seiten des Ausgabekanals (28) gegenüberliegende konvexe Außenoberflächen (33, 34) aufweist, deren Flächennormalen in zu der Drehachse (A) senkrechten Ebenen liegen und die sich jeweils zu der Frontöffnung (5) erstrecken.

4. Brenner-Lanzeneinsatz (1) nach Anspruch 3,
**dadurch gekennzeichnet, dass** die frontöffnungsseitigen Enden der beiden konvexen Außenoberflächen (33, 34) durch einen planen Oberflächenbereich (35) der Ausgabekomponente (31) verbunden sind, in dem die Ausgabeöffnung (29) angeordnet ist.

5. Brenner-Lanzeneinsatz (1) nach Anspruch 3 oder 4,
**dadurch gekennzeichnet, dass** die Ausgabekomponente (31) einen Kühlkanal (37), einen Kühlmitteleinlass (38) zur Einführung eines Kühlmittels in den Kühlkanal (37) und einen Kühlmittelauslass (39) zur Abführung des Kühlmittels aus dem Kühlkanal (37) aufweist.

6. Brenner-Lanzeneinsatz (1) nach einem der Ansprüche 3-5,
**dadurch gekennzeichnet, dass** die Antriebseinheit (9) über das zweite Gelenk (53) mit der Ausgabekomponente (31) verbunden ist.

7. Brenner-Lanzeneinsatz (1) nach einem der vorhergehenden Ansprüche,
**gekennzeichnet durch** eine Dichtung (41) zur Abdichtung eines Zwischenraums zwischen der Brenner-Lanzeneinheit (7) und dem Trägerkörper (3) im Bereich der Frontöffnung (5).

8. Brenner-Lanzeneinsatz (1) nach einem der vorhergehenden Ansprüche,
**dadurch gekennzeichnet, dass** die Brenner-Lanzeneinheit (7) eine Zuführungseinheit (45) zur Einleitung des Betriebsstoffes (15, 15') in den Ausgabekanal (28) aufweist.

9. Brenner-Lanzeneinsatz (1) nach Anspruch 8,
**dadurch gekennzeichnet, dass** die Zuführungseinheit (45) lösbar mit der Ausgabekomponente (31) verbunden ist.

10. Brenner-Lanzeneinsatz (1) nach einem der vorhergehenden Ansprüche,
**dadurch gekennzeichnet, dass** der Ausgabekanal (28) senkrecht zu der Drehachse (A) verläuft.

11. Brenner-Lanzeneinsatz (1) nach einem der vorhergehenden Ansprüche,
**dadurch gekennzeichnet, dass** die Ausgaberichtung in einer zwischen den beiden Endstellungen liegenden Mittelstellung der Brenner-Lanzeneinheit (7) einen Winkel zwischen 30 Grad und 60 Grad, besonders bevorzugt zwischen 40 Grad und 50 Grad, mit der Richtung der Erdanziehungskraft bildet, wenn der Brenner-Lanzeneinsatz (1) in die Wandöffnung (17) des Lichtbogenofens (2) eingesetzt ist.

12. Brenner-Lanzeneinsatz (1) nach einem der vorhergehenden Ansprüche, **dadurch gekennzeichnet, dass** der Trägerkörper (3) eine Frontplatte (25), in welcher die Frontöffnung (5) angeordnet ist, eine Deckelplatte (11) die oberhalb der Frontplatte (25) angeordnet ist, sowie zwei Seitenplatten (23), wobei diese jeweils mit der Frontplatte (25) und der Deckelplatte (11) verbunden sind und die Frontöffnung (5) einschließen, aufweist, wobei die Drehachse (A) derart angeordnet ist, dass die Brenner-Lanzeneinheit (7) überwiegend, bevorzugt ausschließlich, drehbar in Richtung einer der zwei Seitenplatten (23) ist.

13. Brenner-Lanzeneinsatz (1) nach einem der vorhergehenden Ansprüche,
**dadurch gekennzeichnet, dass** ein Drehen der Brenner-Lanzeneinheit (7) von einer ersten Endstellung in die zweite Endstellung die Ausgaberichtung um bis zu 60 Grad ändert.

14. Brenner-Lanzeneinsatz (1) nach einem der vorhergehenden Ansprüche,
**dadurch gekennzeichnet, dass** ein Schwenken der Brenner-Lanzeneinheit (7) von einer ersten Endstellung in die zweite Endstellung die Ausgaberichtung um 20 bis 30 Grad ändert

15. Brenner-Lanzeneinsatz (1) nach Anspruch 2,
**dadurch gekennzeichnet, dass** der Antriebszylinder (51) ein Hydraulik- oder Pneumatikzylinder ist.

16. Lichtbogenofen (2) mit wenigstens einem gemäß einem der vorhergehenden Ansprüche ausgebildeten Brenner-Lanzeneinsatz (1).

## Claims

1. Burner lance insert (1) for an electric arc furnace (2) having a furnace crucible, the burner lance insert (1) having
- a support body (3) which can be inserted into a wall opening (17) of the electric arc furnace (2) and which has a front opening (5) which, after the support body (3) has been inserted into the wall opening (17), faces the furnace interior of the electric arc furnace (2),
- a burner lance unit (7) which is mounted in the support body (3) to be rotatable about an axis of rotation (A) and which has a delivery channel (28) which runs to a delivery opening (29) of the burner lance unit (7) located in the front opening (5), **characterized in that** the axis of rotation (A), after the support body (3) has been inserted into the wall opening (17), forms an angle of between 30 degrees and 60 degrees, particularly preferably from 40 degrees to 50 degrees, with the direction of the force of gravity and defines a delivery direction of the burner lance unit (7) for the delivery of a fuel (15, 15') and/or a flame (13, 13'), wherein the delivery direction is always directed into the furnace crucible after the support body (3) has been inserted into the wall opening (17),
- the burner lance unit (7) is suitable for performing both a burner operation and a lance operation,
- and a drive unit (9) for rotating the burner lance unit (7) between two end positions in which the delivery opening (29) assumes positions in the front opening (5) which are different from one another and the delivery channel (28) defines delivery directions which are different from one another.

2. Burner lance insert (1) according to Claim 1, **characterized in that** the drive unit (9) has a drive cylinder (51) which is arranged at least approximately parallel to the delivery channel (28) and which is connected *via* a first link (52) to the support body (3) and *via* a second link (53) to the burner lance unit (7) .

3. Burner lance insert (1) according to Claim 1 or 2,
**characterized in that** the burner lance unit (7) has a delivery component (31) on the front opening side, through which there runs an end portion, on the front opening side, of the delivery channel (28) and which has two convex outer surfaces (33, 34) located opposite one another on different sides of the delivery channel (28), the surface normals of which convex outer surfaces lie in planes perpendicular to the axis of rotation (A) and which each extend to the front opening (5).

4. Burner lance insert (1) according to Claim 3,
**characterized in that** the ends, on the front opening side, of the two convex outer surfaces (33, 34) are connected by a planar surface region (35) of the delivery component (31), in which the delivery opening (29) is arranged.

5. Burner lance insert (1) according to Claim 3 or 4,
**characterized in that** the delivery component (31) has a cooling channel (37), a coolant inlet (38) for the introduction of a coolant into the cooling channel (37), and a coolant outlet (39) for discharging the coolant from the cooling channel (37).

6. Burner lance insert (1) according to one of Claims 3 to 5,
**characterized in that** the drive unit (9) is connected *via* the second link (53) to the delivery component (31).

7. Burner lance insert (1) according to one of the preceding claims,
**characterized by** a seal (41) for sealing a gap between the burner lance unit (7) and the support body (3) in the region of the front opening (5).

8. Burner lance insert (1) according to one of the preceding claims,
**characterized in that** the burner lance unit (7) has a feed unit (45) for introducing the fuel (15, 15') into the delivery channel (28) .

9. Burner lance insert (1) according to Claim 8,
**characterized in that** the feed unit (45) is releasably connected to the delivery component (31).

10. Burner lance insert (1) according to one of the preceding claims,
**characterized in that** the delivery channel (28) runs perpendicular to the axis of rotation (A).

11. Burner lance insert (1) according to one of the preceding claims,
**characterized in that** the delivery direction in a middle position of the burner lance unit (7) lying between the two end positions forms an angle of between 30 degrees and 60 degrees, particularly preferably between 40 degrees and 50 degrees, with the direction of the force of gravity, when the burner lance insert (1) is inserted into the wall opening (17) of the electric arc furnace (2) .

12. Burner lance insert (1) according to one of the preceding claims, **characterized in that** the support body (3) has a front plate (25), in which the front opening (5) is arranged, a cover plate (11) which is arranged above the front plate (25), and two side plates (23), wherein the side plates are each connected to the front plate (25) and the cover plate (11) and enclose the front opening (5), wherein the axis of rotation (A) is so arranged that the burner lance unit (7) is rotatable predominantly, preferably exclusively, in the direction of one of the two side plates (23).

13. Burner lance insert (1) according to one of the preceding claims,
**characterized in that** a rotation of the burner lance unit (7) from a first end position into the second end position changes the delivery direction by up to 60 degrees.

14. Burner lance insert (1) according to one of the preceding claims,
**characterized in that** a pivoting of the burner lance unit (7) from a first end position into the second end position changes the delivery direction by from 20 to 30 degrees.

15. Burner lance insert (1) according to Claim 2,
**characterized in that** the drive cylinder (51) is a hydraulic or pneumatic cylinder.

16. Electric arc furnace (2) having at least one burner lance insert (1) formed according to one of the preceding claims.

## Revendications

1. Insert lance de brûleur (1) pour un four à arc (2) comprenant une cuve de fusion, l'insert lance de brûleur (1) comprenant
- un corps de support (3), pouvant être placé dans une ouverture de paroi (17) du four à arc (2), pourvu d'une ouverture frontale (5) qui est orientée vers l'intérieur du four à arc (2) après la mise en place du corps de support (3) dans l'ouverture de paroi (17),
- une unité lance de brûleur (7) logé de manière à pouvoir tourner autour d'un axe de rotation (A) dans le corps de support (3), pourvu d'un canal de distribution (28) qui s'étend vers une ouverture de distribution (29) de l'unité lance de brûleur (7) située dans l'ouverture frontale (5), **caractérisé en ce que** l'axe de rotation (A) forme, après la mise en place du corps de support (3) dans l'ouverture de paroi (17), un angle compris entre 30° et 60°, particulièrement préférablement entre 40° et 50°, avec la direction de la gravité terrestre et définit une direction de distribution de l'unité lance de brûleur (7) pour la distribution d'une matière consommable (15, 15') et/ou d'une flamme (13, 13'), la direction de distribution étant orientée de manière permanente dans la cuve de fusion après la mise en place du corps de support (3) dans l'ouverture de paroi (17),
- l'unité lance de brûleur (7) étant apte à mettre en œuvre aussi bien un fonctionnement de brûleur qu'un fonctionnement de lance,
- et une unité d'entraînement (9) permettant de faire tourner l'unité lance de brûleur (7) entre deux positions d'extrémité dans lesquelles l'ouverture de distribution (29) adopte des positions différentes les unes des autres dans l'ouverture frontale (5) et le canal de distribution (28) définit des directions différentes les unes des autres de distribution.

2. Insert lance de brûleur (1) selon la revendication 1,
**caractérisé en ce que** l'unité d'entraînement (9) comprend un vérin d'entraînement (51) disposé de manière au moins approximativement parallèle au canal de distribution (28), qui est relié au corps de support (3) par l'intermédiaire d'une première articulation (52) et à l'unité lance de brûleur (7) par l'intermédiaire d'une seconde articulation (53) .

3. Insert lance de brûleur (1) selon la revendication 1 ou 2,
**caractérisé en ce que** l'unité lance de brûleur (7) comprend un composant de distribution (31), situé du côté de l'ouverture frontale, à travers lequel s'étend une partie d'extrémité, située du côté de l'ouverture frontale, du canal de distribution (28), et qui comprend deux surfaces extérieures (33, 34) convexes opposées l'une à l'autre sur des côtés différents du canal de distribution (28), surfaces dont les normales sont situées dans des plans perpendiculaires à l'axe de rotation (A), et s'étendant chacune vers l'ouverture frontale (5).

4. Insert lance de brûleur (1) selon la revendication 3,
**caractérisé en ce que** les extrémités, situées du côté de l'ouverture frontale, des deux surfaces extérieures (33, 34) convexes sont reliées par une zone de surface (35) plane du composant de distribution (31) dans laquelle est située l'ouverture de distribution (29).

5. Insert lance de brûleur (1) selon la revendication 3 ou 4,
**caractérisé en ce que** le composant de distribution (31) comprend un canal de refroidissement (37), une entrée d'agent de refroidissement (38) pour l'introduction d'un agent de refroidissement dans le canal de refroidissement (37) et une sortie d'agent de refroidissement (39) pour l'évacuation de l'agent de refroidissement du canal de refroidissement (37).

6. Insert lance de brûleur (1) selon l'une des revendications 3-5,
**caractérisé en ce que** l'unité d'entraînement (9) est reliée au composant de distribution (31) par l'intermédiaire de la seconde articulation (53).

7. Insert lance de brûleur (1) selon l'une des revendications précédentes,
**caractérisé par** une garniture d'étanchéité (41) destinée à rendre étanche un espace intermédiaire entre l'unité lance de brûleur (7) et le corps de support (3) dans la zone de l'ouverture frontale (5).

8. Insert lance de brûleur (1) selon l'une des revendications précédentes,
**caractérisé en ce que** l'unité lance de brûleur (7) comprend une unité d'amenée (45) pour alimenter la matière consommable (15, 15') dans le canal de distribution (28).

9. Insert lance de brûleur (1) selon la revendication 8,
**caractérisé en ce que** l'unité d'amenée (45) est reliée au composant de distribution (31) de manière détachable.

10. Insert lance de brûleur (1) selon l'une des revendications précédentes,
**caractérisé en ce que** le canal de distribution (28) s'étend perpendiculairement à l'axe de rotation (A).

11. Insert lance de brûleur (1) selon l'une des revendications précédentes,
**caractérisé en ce que** la direction de distribution forme, dans une position moyenne de l'unité lance de brûleur (7) située entre les deux positions d'extrémité, un angle compris entre 30° et 60°, particulièrement préférablement entre 40° et 50°, avec la direction de la gravité terrestre, lorsque l'insert lance de brûleur (1) est placé dans l'ouverture de paroi (17) du four à arc (2).

12. Insert lance de brûleur (1) selon l'une des revendications précédentes,
**caractérisé en ce que** le corps de support (3) comprend une plaque frontale (25) dans laquelle est située l'ouverture frontale (5), une plaque de couverture (11) qui est située au-dessus de la plaque frontale (25), ainsi que deux plaques latérales (23), celles-ci étant reliées à chaque fois à la plaque frontale (25) et à la plaque de couverture (11) et entourant l'ouverture frontale (5), l'axe de rotation (A) étant disposé de façon que l'unité lance de brûleur (7) puisse être tourné principalement, de préférence exclusivement, en direction de l'une des deux plaques latérales (23).

13. Insert lance de brûleur (1) selon l'une des revendications précédentes,
**caractérisé en ce qu'**une rotation de l'unité lance de brûleur (7) d'une première position d'extrémité dans la seconde position d'extrémité modifie la direction de distribution d'un angle allant jusqu'à 60°.

14. Insert lance de brûleur (1) selon l'une des revendications précédentes,
**caractérisé en ce qu'**un pivotement de l'unité lance de brûleur (7) d'une première position d'extrémité dans la seconde position d'extrémité modifie la direction de distribution d'un angle compris entre 20° et 30°.

15. Insert lance de brûleur (1) selon la revendication 2,
**caractérisé en ce que** le vérin d'entraînement (51) est un vérin hydraulique ou pneumatique.

16. Four à arc (2) comprenant au moins un insert lance de brûleur (1) conçu selon l'une des revendications précédentes.
